# EUROPEAN PATENT SPECIFICATION

(11) **EP 0 957 706 B1**
(45) Date of publication and mention of the grant of the patent: **14.02.2007**
(21) Application number: 96916298.1
(22) Date of filing: 04.06.1996
(51) Int. Cl.: A45F 3/14, A45F 5/10

(54) **EASY CARRYING EQUIPMENT**
AUSRÜSTUNG ZUM ERLEICHTERTEN TRANSPORT
MATERIEL FACILITANT LE TRANSPORT OU LE PORTAGE

(30) Priority: 05.06.1995 IT NA950029; 27.11.1995 IT NA950055
(43) Date of publication of application: 24.11.1999
(73) Proprietor: Caputi, Giancarlo, I-80127 Napoli (IT)
(72) Inventor: Caputi, Giancarlo, I-80127 Napoli (IT)
(86) International application number: PCT/IT1996/000115
(87) International publication number: WO 1996/039063

(56) References cited:
- EP-A- 0 596 839
- WO-A-91/11368
- WO-A-92/22229
- WO-A-93/11684
- AU-A- 4 608 779
- BE-A- 1 004 331
- CA-A- 1 248 501
- FR-A- 368 864
- FR-A- 509 182
- FR-A- 2 195 561
- FR-A- 2 478 230
- GB-A- 1 494 480
- GB-A- 2 218 901
- US-A- 3 306 507
- US-A- 4 841 596
- US-A- 5 060 998

## Description

### Technical Field

This invention relates to hooking carrying handles.

In the field of hand carriers the carrying of goods is generally performed by use of containers, some of which are troublesome to hand. Moreover, containers are often encumbering, and have a dimension proportioned to the goods to be carried.

For this reason many persons to which suddenly happens to need to carry things are obliged to tire their hands and arms.
Further, there are some objects for which a satisfying carrier has not been found. For this reason women make purchases and food-shopping having hands filled with bags, sacks, boxes, which are tiring for fingers, as the handles of plastic bags and the strings of packages "cut" hands of users.

### Background Art

The present application is a continuation of my earlier application PCT/IT94/00100, having found some improvements.

In prior art exist some hand carrying tools having central handle and a connecting apparatus at each end., for the carrying of plastic shoppers, and they differ because of the features of the handle and of said apparatuss.
A) With reference to the features of the handle:
   a) it is common in prior art to find handles made lighter by lateral grooves. Said grooves create a empty zone, less comfortable for the hand of user.
      This happens also in Stoft (WO91/11368), wherein surface 60 is described as a writing surface which can be attached either on the flat inner surface of a longitudinal recess, either on the external surface of a full handle, which indicates a paper-thickness of said writing surface.
   b) generally the comfort of a non-padded handle depends by the shape given for the fitting on a hand, that means by the measures of 5 finger-fitting protrusions, generally located at the same standard distance, which give shape to 4 identical finger-fitting shapes. As there are fingers having very different measures, the distance between said protrusions may be good for a big hand or for a little hand, but not for both, generally by cause of the measures of spaces for index and for little finger (as central two fingers must necessarily be separated by a central protrusion) .
   c) in prior art are not shown padded connecting handles, nor lateral bodies useful to keep forced the edges of a padding.
B) With reference to the connecting apparatus, generally it is hook-shaped, and it is provided with thin passages which prevent the easy coming out of the hooked handles of shoppers when put down.
   That means that:
   a) at the moment of connection, user must pay attention to place said handles in a thin passage
   b) at the moment of disconnection, user must pay attention to extract said handles from the right passage, needing use of both hands in this operation.
   In this cases user, if in a hurry, can mistake the manoeuvre and lose time in connecting or disconnecting
   In some cases at each end there is a recess open to a longitudinal upper edge, provided with one only horizontal resilient retainer (for the keeping in place of said hooked handles)(Clark, GB 2 218 901 A), which partially closes , and a thin passage is left.
   That means that :
   a) coming out of thin strings cannot be surely prevented by this type of hooking apparatuss
   b) with reference to the necessity to keep the dimensions of a handle in handy and pocket measures , it is clear that if there is only one elastic retainerr and it is horizontal, for its comfortable working it is necessary to increase its length, and therefore the length of the hole handle, more than if the elastic retainers should be two, a vertical and a horizontal one.
   In some other cases the thin passage is completely closed (Ducruox, FR 201950561 A), but a two-hands manoeuvre is necessary for the disengagement of the load.
   In some other cases (as in case of my cited PCT application) there are mechanical parts which need a double two hands manoeuvre and that , after a certain sliding, slide too easily and do not keep their position open/closed.
C) With reference to accessories for wrapping a load and connecting it to a handle, prior art includes some strap-shaped flexible bodies, which are encumbering and cannot be built by plastic injection, but need a mnufactoring.
D) With reference to the shoulder carrying of a handle, prior art (Fink, U.S 4,841,596) indicates handles which need a specific holes in the handle.

### Objects and advantages

Accordingly, several objects and advantages of the present invention are:
a) to provide a paddable handle thanks to the existence of front and back grooves provided with forceable stoppers for the keeping in place of the edges of a soft flat body to be used as a padding
b) to provide an equipment comprising a connecting handle having a connecting apparatus having two opposite elastic elements (4,15) for the opening and the closing of a hooking space, apparatus able to be connected to the objects to be carried, particularly to plastic shoppers and to objects tied by thin strings, able to keep the connection also when load laying relieved, and able to permit the detaching by simply pushing upwards the hooked load (or, which is the same, by pulling upwards the handle after having turned downwards its hooking apparatus, which is a one-hand manoeuvre)
c) to provide a handle shape good for any measure of a hand, thanks to the fact that there are only three protrusions (for the shape for middle and ring fingers) being space at their side much more wide than a finger.
d) to include in the equipment a set of additional connecting elements able to keep tight and to connect objets to said handle, and to permit the use of said handle in different carrying situations.

All parts of the equipment are shaped so as to permit their manufacture in plastic material.

Still further objects and advantages will become apparent from a consideration of the ensuing description and drawings.

### Brief description of Drawing figures

Figures 1,4,9,17 relate to connecting handles.
Figures 2,3,10,11 relate to details of connecting handles.
Figures 18,19 relate to cable-shaped accessories
Figure 20 relates to use of accessories of a connecting handle..

### Disclosure of Invention

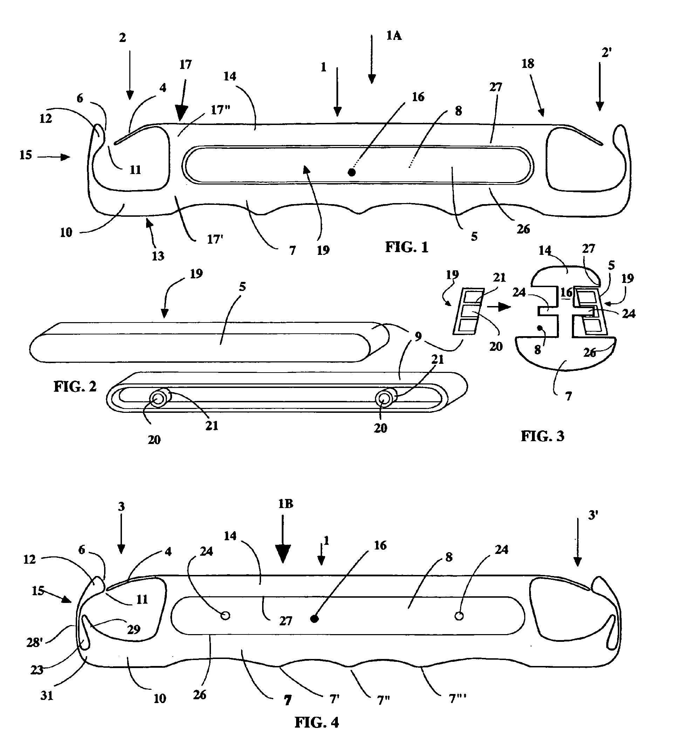

The invention comprises:
**A) a handle :**
   a) made paddable, by the fact that there are a front and a rear groove 8, in which a lateral element or stopper 19 can be forced. This permits, if desired, to keep in place a padding 28 by simply forcing its lateral edges 47 between lateral part 9 of stopper 19 and lower internal face 30 of each groove 8, as shown in Figs. 2,3,9,10.
   b) made connectable to objects, by the fact that it has at each side a connecting apparatus, shown in the embodiments of Figs. 1,4,17.
**B) a set of accessories** which can be used with the handle for carrying different kinds of objects, in particular:
   a) A hookable tightening tool 32, shown in the embodiments of Figs. 18,19, which permits the connecting of more than one object to a handle;

**Fig. 1** shows , indicated as **1A,** a hand carrying tool or hooking handle having a central portion or handle **1** and at each end **17,18** a hooking apparatus **2,2'** which is formed by two protrusions **4,13** protruding from the vertical face of end 17. Protrusion 4 extends from the end of upper part **(17")** of end 17, it is thin and elastic , slightly curved downwards for helping insertions. Protrusion 13 extends from the lower part **17'** of end 17 and comprises a horizontal and resistant corbel **10** ending in a vertical element **15** hook-shaped, ending in a thickened ending **12,** having a surface **6,** inclined downwards for the helping of insertions. A little passage **11** is left between element 4 and surface 6. Lower zone 7 of central portion **1** is hand-shaped; central zone **16** is a zone thinner than inferior and upper zone **7,14,** so as to obtain , at each lateral side, a groove **8** in which an elongated lateral element **19** is forced as a stopper in a position that locates external surface **5** slightly deeper than the edges **27,26** of parts 14,7.

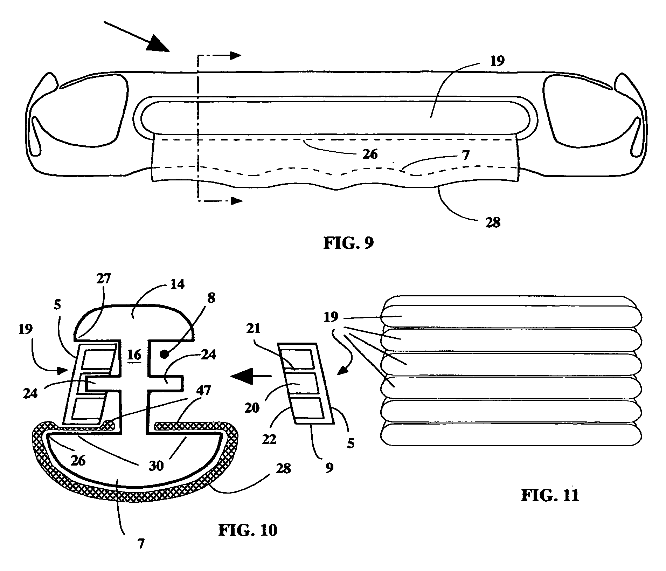

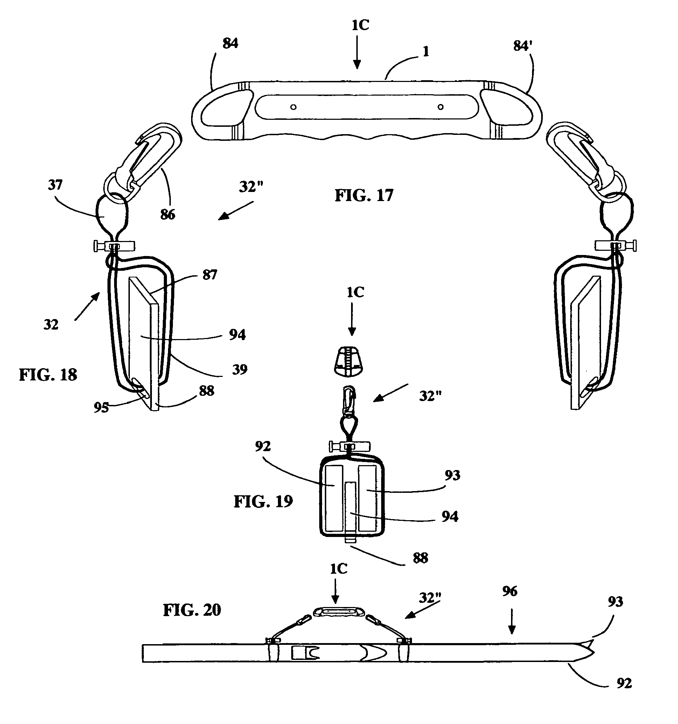

**Fig. 2** shows front and rear view of lateral element or stopper 19. In rear view are shown protrusions **21** having groove joints 20, to be connected to tongue joints 24 , shown in Figs. 3, 4. Obviously this type of joint is an example, as could be used any known type of joint.

**Fig. 3** is a cross-sectional view of tool 1A, and shows insertion of stoppers 19 in groove 8, in a position for which face 5 is deeper than edges 26,27. In **Figs. 9,10** is further shown the way for keeping in place padding **28 :** each edge 47 of padding 28 is forced between inferior part of lateral part **9** of stopper 19 and lower internal face **30** of groove 8; connection can be improved with glue. In **Fig. 11** is shown that stoppers 19 can be disposed all to gather for the printing, thanks to the fact that external face 5 is parallel to the opposite side **22** of stopper 19.

**Fig. 4** shows a hand carrying tool **1B** which is identical to tool 1A except that :a) in the hooking apparatuss **,3,3'** located at each side of handle 1 b) in the shape of inferior part 7. Hooking apparatus 3 permits to eliminate space 11 between surface 6 and elastic element 4, thanks to the fact that vertical element 15 is thin and very elastic thanks to the fact that the thin part gains in length because protruding from the inferior part **31** of corbel 10. Therefore there is an empty supplemental space **23** between thin portion **28'** of element 15 and hook-shaped upper end **29** of corbel 10. Space 23 permits elastic movement of element 15 against element 4, so as to obtain the complete closure of passage 11, thanks to the double elasticity of elements 15,4. Passage 11 can easily be opened by the simply intentional pushing or extracting of an object, e.g. the handle of a plastic bag. Once inserted, said handle remains in place even when tool 1B abandoned by user in his car, ready to be used again without loosing connection with the load. Space 23 can also be used as a supplemental hooking space.
Fig. 4 shows tool 1B with its lateral elements 19 out of place, for major clarity. Hand-shape on inferior part 7 is characterised in that it can fit on differently dimensioned hands, thanks to the fact that there are only three finger-fitting protrusions 7',7",7"', generating only two central finger-shapes of standard dimensions, being space at their side much more wide than a finger In fact, if one divides in equal dimensioned finger-shapes the space for a big hand (as shown in fig 1), when in use to a little hand it should happen that annular and middle finger are always in place, separated by protrusion 7", but index and little finger cannot be located over protrusions 7',7"', and they are pressed against said protrusions in a uncomfortable position.

If instead in the same space for a big hand there are only two central finger-shapes for a small finger dimension (and therefore that there are only three finger-fitting protrusions 7',7",7"'), even if handle used by a big hand annular and middle finger are always correctly separated by protrusion 7", and index and annular are surely positioned at the side of protrusions 7',7"', in comfortable position.

**Figs. 18,19** show accessories for the increasing the carrying power of a tool like 1B. Said accessories are really necessary in some carrying situations, that is when : the load has no zone where it can be hooked, and must be wrapped in something (as shown in Fig. 20) or else when one desires to carry several objects with one only handle.

In the carrying of objects by a hooking handle as shown, the upper part of hooking apparatus is weak for transportation, and it may happen that the handle could be wrongly hold, causing the coming out of the load from said upper part. This can be a problem for particular objects to be carried, or in cases on has the other hand blocked, and one cannot easily repeat hooking operation. Therefore is here provided (Fig. 17) a hand carrying tool **1C**, which differs from tool 1A, 1B because of has a ring **84,84'** at each side of handle 1. In this way tool 1C cannot hook but can be hooked by snap hooks similar to snap hook **86**, being part of additional cable set **32**" **(Fig.18).** Set 32 is particularly useful for the carrying of a ski pair (in the way shown in Fig.20). It comprises a set 32, as shown above, further comprising snap hook 86 and flat element **94**. Said flat element has a hole **95** in its inferior side **88** through which is threaded cable 39. For the carrying of a ski pair **96** flat element 94 is inserted with upper part **87** between skis **97,93 (Fig. 19)**, while skis wrapped by cable 39. Therefore is obtained that : a) skis are not kept in straight position, loosing their slightly curved shape; b) set 32" cannot slide on skis in a not desired position, by cause that element 94 is compressed and blocked by the wrapped skis, such as in a sandwich.

All shown tools can be built in plastic material, such as Nylon and the like, permitting the production of a very cheap equipment having great utility.

Having described the invention and its advantages, one can see that it is based on the use of several parts and that each part can have different embodiments and be used in different combinations. This gives to this new carrying equipment a great extent of uses, of which the devices described in the figures are only some examples. Accordingly, the scope of the invention should be determined not only by the embodiments illustrated, but by the appended claims and their legal equivalents.

## Claims

1. A handle for the hand-carrying of objects, containers and the like , having a central portion (1) built in a resistant material, such as plastic, nylon, metal, wood having in each lateral side at least one groove (8)
**characterized in that**:
said groove (8) is substantially filled by a complementary-shaped element or elongated lateral element or stopper (19) forced in said groove (8), said stopper (19) having a thickness and a resistance able to keep in place the edges (47) of a soft flat body , useful as a padding (28), when said edges (47) inserted in said groove (8) and compressed in said groove (8) by said forced stopper (19);
whereby it is possible to obtain a handle to which a user can choose a use with or without a padding respectively when said stopper used in combination with a padding or used alone.

2. The handle of claim 1 wherein said stopper (19) having a lateral part (9) and two opposite sides: a) a external side or surface (5) useful to be printed; b) a internal side (22) ; points of said internal side (22) laying on a plan parallel to said surface (5), so as to permit the horizontality of said surface (5) when said stopper (19) lying on a horizontal plan surface contacting said internal side (22), and able to permit to locate several identical stoppers (19) one close to the other for the contemporaneous printing of their external surface (5);

3. The handle of claim 1 wherein is oblique the angle formed by said external surface (5) of said stopper (19) and the surface of said lateral part (9) of said stopper (19)

4. A handle as claimed in any precedent claim wherein said internal side (22) of said stopper (19) has at least one groove joint (20) to be connected to a tongue joint (24) protruding from said central zone (16)

5. The handle of claim 4 wherein said at least one groove joint (22) is located in a protrusion (21).

6. A handle as claimed in any precedent claim wherein the cross-section of the lower zone (7) of said central portion (1) is wider than the cross-section of its upper zone (14).

7. A handle as claimed in any precedent claim wherein the inferior part of said handle is provided with only three finger-fitting protrusions (7',7"",7"') generating only two central finger-shapes of little dimensions, being space at their side more wide than said finger shapes.

8. A handle as claimed in any precedent claim further comprising a padding (28) connected to said handle.

9. The handle of claim 8 wherein said padding comprises a soft flat element (28) having central portion located over the inferior part (7) of said handle (1), and having each lateral edge (47) inserted in said groove (8) and kept in place by said stopper (19) forced in said lateral groove (8).

10. A handle as claimed in any precedent claim wherein said central portion or handle (1) has at each end (17,18) a connecting apparatus.

11. The handle of claim 10 wherein (1A) said connecting apparatus (2) is formed by two protrusions (4,13) protruding from the substantially vertical face of said end (17); said protrusion (4) extends from the end of upper part (17") of end (17), it is slightly curved downwards for helping insertions; it is thin and elastic , so as to permit a slight-finger-effort for the increasing of passage (11) between. element (4) and surface (6); protrusion (13) extends from the lower part (17') of end 17 and comprises a substantially horizontal and resistant corbel (10) ending in a substantially vertical element (15) hook-shaped, ending in a thickened ending (12), having a surface (6), inclined downwards for the helping of insertions.

12. The handle of claim 10 wherein (1B) said connecting apparatus (3) is formed by two protrusions (4,13) protruding from the substantially vertical face of said end (17):
a) protrusion (4) extends from the end of upper part (17") of end (17), it is slightly curved downwards for helping insertions; it is thin and elastic , so as to permit a slight-finger-effort for the creating and increasing of passage (11) between. element (4) and surface (6);
b) protrusion (13) extends from the lower part (17') of end 17 and comprises a substantially horizontal and resistant corbel (10) ending in a substantially vertical element (15), ending in a thickened ending (12), having a surface (6), inclined downwards for the helping of insertions; said substantially vertical element (15) having a thin and elastic portion (28'); the elasticity of said thin portion (28') being increased by the fact that said portion (28') protrudes by the inferior zone of said corbel (10), gaining in length and therefore in elasticity, keeping a distance from a upper and hook-shaped end (29) of corbel (10), so as to generate, in cooperation with said end (29), a supplemental space (23), useful as a supplemental hooking space and as a space permitting elastic movement of said portion (28');
whereby it is possible to build said hooking apparatus (3) having a initial contact between said surface (6) and said protrusion (4) and therefore , thanks to the existance of two opposite elastic bodies, consisting of said protrusion (4) and of opposite said element (15), it is possible to open and to increase said passage (11) by slightly push inwards the object to be hooked , such as the handle of a plastic shopper;

13. The handle of claim 10 wherein (1C) said connecting apparatus (84) consists in at least one ring-shaped body to be hooked by hooking means connected to a load

14. The handle of claim 1 further comprising:
A) a connecting flexible element or hookable tool (32) comprising: a) a stopper (35) b) a close-curve shaped flexible element such as to form a loop used as a double cable (39) threaded through a said stopper (35) so as to obtain an upper loop (37), for connection with a hook, and a lower loop (33) ; whereby it is possible to manoeuvre said loop (33) so as to form a sliding loop (34) by passing it around its same beginning (33"), under said stopper (35), which works as an obstacle against the sliding of said end (33') in loosing direction; whereby it is possible to keep tight said sliding loop (34) around a load by simply pushing said stopper (35) against sliding end (33') of said loop (33);
B) at least one elongated element (94) having a hole (95) in one side (88); whereby it is possible to keep tight a ski pair avoiding the sliding of said tool thanks to the fact that said element (94) is compressed and blocked between skis and that double cable (39) is threaded through said hole (95) and therefore prevented from sliding along skis in their length direction

15. The handle of claim 14 further comprising at least one obstacle against the coming out of said stopper (35) when manoeuvred.

16. The handle of claim 15 wherein said at least one obstacle is a connector, included in said upper loop (37), selected from the group of rings (40), hooks, snap-hooks (86) and the like,

## Patentansprüche

1. Ein Griff zum Handtragen von Gegenständen, Behältern u.ä , mit einem mittleren Teil (1) aus widerstandsfähigem Material wie Plastik, Nylon, Metall, Holz, auf jeder Seite mit mindestens einer Nut (8) versehen,
**dadurch gekennzeichnet, dass**:
die Aussparung (8) grundsätzlich mit einem komplementären geformtem Element oder verlängerungselement oder Stopper (19) gefüllt ist, welcher in die Aussparung (8) gepresst wird und dass der genannte Stopper (19) eine Stärke und Widerstandskraft aufweist, mit der die Ränder (47) eines weichen und flachen Körpers, der als Polsterung (28) dient, wenn genannte Ränder (47) in die Aussparung (8) eingeführt und
in der Aussparung (8) von dem hineingepressten Stopper (19) zusammengedrückt werden, festgehalten werden können;
wodurch die Möglichkeit besteht, einen Griff zu erhalten, den der Benutzer wahlweise mit oder ohne Polsterung verwenden kann, wenn der genannte Stopper mit einer Polsterung oder alleine verwendet wird.

2. Griff gemäss Anspruch 1, **dadurch gekennzeichnet, dass** der Stopper (19) einen seitlichen Teil (9) und zwei gegenüberliegende Seiten besitzt: a) eine äußere Seite oder Fläche (5), die zum Bedrucken verwendet werden kann; b) eine innere Seite (22) ; dass sich Stellen dieser Innenseite (22) auf einer Ebene parallel zu Fläche (5) befinden, so dass die Fläche (5) waagrecht sein kann, wenn der Stopper (19) auf einer waagrechten Ebene liegt und die Innenseite (22) berührt, und die Möglichkeit besteht, mehrere identische Stopper (19) nebeneinander, für die gleichzeitige Bedruckung ihrer Außenfläche (5) unterzubringen;

3. Griff gemäss Anspruch 1, **dadurch gekennzeichnet, dass** der Winkel, der von genannter Außenfläche (5) des Stoppers (19) und der Fläche des Seitenteiles (9) des Stoppers (19) gebildet wird, schräg ist.

4. Griff nach einem der vorhergehenden Ansprüche, **dadurch gekennzeichnet, dass** die Innenseite (22) von genanntem Stopper (19) mindestens eine Nut (20) besitzt, die mit einer vorstehenden Feder (24), die von genannter mittleren Zone vorsteht, zu vereinen ist.

5. Griff gemäss Anspruch 4 **dadurch gekennzeichnet, dass** sich die Nut (22) in einem Vorsprung (21) befindet.

6. Griff nach einem der vorhergehenden Ansprüche, **dadurch gekennzeichnet, dass** der Querschnitt der unteren Zone (7) des mittleren Teiles (1) breiter als der Querschnitt seines oberen Bereiches (14) ist.

7. Griff nach einem der vorhergehenden Ansprüche, **dadurch gekennzeichnet, dass** der untere Teil des Griffes mit nur drei fingergerechten Vorsprüngen (7',7"",7'") versehen ist, die nur zwei mittlere, klein bemessene Fingerformen bilden, da der an ihrer Seite vorhandene Platz breiter als genannte Fingerformen ist.

8. Griff nach einem der vorhergehenden Ansprüche **dadurch gekennzeichnet, dass** er eine Polsterung (28), die mit genanntem Griff vereint ist, enthält.

9. Griff gemäss Anspruch 8, **dadurch gekennzeichnet, dass** genannte Polsterung ein weiches Flachelement (28) enthält und sich der mittlere Teil über dem unteren Teil (7) von Griff (1) befindet, und dass jeder seitliche Rand (47) in die Aussparung (8) eingeführt und vom Stopper (19), welcher in die seitliche Aussparung (8) gepresst ist, gehalten wird.

10. Griff nach einer der vorgehenden Ansprüche, **dadurch gekennzeichnet, dass** der mittlere Teil oder Griff (1) an jedem Ende (17,18) ein Verbindungselement besitzt.

11. Griff gemäss Anspruch 10, **dadurch gekennzeichnet, dass** (1A) das Verbindungselement (2) aus zwei Vorsprüngen (4,13) besteht, die von der grundsätzlich senkrechten Fläche des Endes (17) vorsteht; dass sich genannter Vorsprung (4) vom Ende des oberen Teiles (17") von Ende (17) verlängert, dass er leicht nach unten gebogen ist, um die Einführung zu erleichtern; dass er dünn und elastisch, um mit einer einfachen Fingerbewegung den Durchgang (11) zwischen Element (4) und Fläche (6) vergrößern zu können; dass sich der Vorsprung (13) vom unteren Teil (17') von Ende 17 verlängert und eine grundsätzlich waagrechte und widerstandsfähige Auskragung (10) besitzt, welche in einem grundsätzlich senkrechten, hakenförmigen Element (15) endet, welches in einem verstärkten Ende (12), das eine nach unten gebogene Fläche (6) besitzt, um die Einführung zu erleichtern, endet.

12. Griff gemäss Anspruch 10, **dadurch gekennzeichnet, dass** (1B) das Verbindungselement (3) aus zwei Vorsprüngen (4,13) besteht, welche von der grundsätzlich senkrechten Fläche genannten Endes (17) vorstehen:
a) Vorsprung (4) verlängert sich vom Ende des oberen Teiles (17") von Ende (17) und ist leicht nach unten gebogen, um die Einführung zu erleichtern; er ist dünn und elastisch, um mit einer leichten Fingerbewegung den Durchgang (11) zwischen Element (4) und Fläche (6) herstellen und vergrößern zu können;
b) Vorsprung (13) verlängert sich vom unteren Teil (17') von Ende 17 und besitzt eine grundsätzlich waagrechte und widerstandsfähige Auskragung (10), welche in einem grundsätzlich senkrechten Element (15) endet, welches in einem verstärkten Ende (12) endet und eine Fläche (6) besitzt, die nach unten gebogen ist, um die Einführungen zu erleichtern; dass das grundsätzlich senkrechte Element (15) einen dünnen, elastischen Teil (28') besitzt; dass die Elastizität des dünnen Teiles (28') **dadurch** erhöht wird, dass der Teil (28') von den unteren Bereichen der Auskragung (10) vorsteht, und somit an Länge und demzufolge an Elastizität gewinnt, und einen Abstand von einem oberen hakenförmigen Ende (29) der Auskragung (10) beibehält, und gemeinsam mit dem Ende (29), zusätzlichen Platz (23) herstellt, der als zusätzlicher Aufhängeplatz nützlich ist und als Raum für die elastische Bewegung genanntes Teilen (28') dient;
**dadurch gekennzeichnet, dass** es möglich ist, die Aufhängvorrichtung (3), die einen anfänglichen Kontakt zwischen genannter Fläche (6) und genanntem Vorsprung (4) hat, herzustellen und es daher dank der Anwesenheit von zwei gegenüberliegenden elastischen Körpern, welche aus genanntem Vorsprung (4) und dem gegenüberliegenden Element (15) bestehen, möglich ist, den Durchgang (11) zu öffnen und zu vergrößern, indem der aufzuhängende Gegenstand, wie beispielsweise der Griff einer Plastiktüte, leicht nach innen gedrückt wird;

13. Griff gemäss Anspruch 10, **dadurch gekennzeichnet, dass** (1C) das Verbindungselement (84) aus mindestens einem ringförmigen Körper besteht, der mittels Aufhängmittel, die an eine Last angehängt sind, aufgehängt wird.

14. Der Griff gemäss Anspruch1 umfasst außerdem:
A) ein flexibles Verbindungselement oder Hängevorrichtung (32) bestehend aus: a) einem Stopper (35) b) einem flexiblen, eng gebogenen, geformten Element zur Bildung eines Ringes, der als Doppelseil (39), das durch genannten Stopper (35) gezogen wird, um einen oberen Ring (37) für die Verbindung mit einem Haken und einen unteren Ring (33) zu erhalten, verwendet wird; **dadurch gekennzeichnet, dass** die Möglichkeit besteht, den Ring (33) so hand zu haben, dass ein gleitender Ring (34) gebildet wird, indem man ihn um seinen eigenen Anfang (33"), unter dem Stopper (35), der als Hindernis gegen das Gleiten genannten Endes (33') in freie Richtung dient, herumführt ; dass der gleitende Ring (34) um eine Last herum, durch Drücken des Stoppers (35) gegen das gleitende Ende (33') von Ring (33), festgehalten werden kann;
B) mindestens ein langes und dünnes Element (94) mit einem Loch (95) auf einer Seite (88); **dadurch gekennzeichnet, dass** ein Paar Ski festgehalten und das Gleiten dieser Vorrichtung dank der Tatsache, dass genanntes Element (94) zusammengedrückt und zwischen den Skiern blockiert wird und dass das Doppelseil (39) durch genanntes Loch (95) geführt und vermieden wird, dass die Skier in die Längsrichtung rutschen.

15. Griff gemäss Anspruch 14, **dadurch gekennzeichnet dass** genannter Griff außerdem mindestens ein Hindernis gegen den Austritt von genanntem Stopper (35) bei dessen Handhabung, besitzt.

16. Griff gemäss Anspruch 15, **dadurch gekennzeichnet, dass** es sich bei dem genannten Hindernis um einen Verbinder handelt, der im oberen Ring (37), der aus der Gruppe von Ringen (40), Haken, Karabinerhaken (86) u.ä. ausgewählt wurde, untergebracht ist.

## Revendications

1. Poignée pour le transport manuel d'objets, récipients et similaires, ayant une portion centrale (1) incorporée dans une matière résistante, telle que plastique, nylon, métal, bois, ayant de chaque côté au moins un creux (8)
**caractérisée en ce que** :
ledit creux (8) est substantiellement rempli avec un élément ayant une forme complémentaire ou un élément latéral allongé ou arrêt (19) forcé dans ledit creux (8), ledit arrêt (19) ayant une épaisseur et une résistance permettant de maintenir dans leur siège les bords (47) d'un corps souple, utile comme rembourrage (28), lorsque lesdits bords (47) sont insérés dans ledit creux (8) et comprimés dans ledit creux (8) par ledit arrêt forcé (19) ;
il est donc possible d'obtenir une poignée que tout utilisateur peut choisir d'utiliser avec ou sans rembourrage respectivement lorsque ledit arrêt est utilisé soit en conjonction avec un rembourrage soit à lui seul.

2. La poignée selon la revendication 1, où ledit arrêt (19) a une portion latérale (9) et deux côtés l'un vis-à-vis de l'autre : a) un côté ou surface extérieure (5) utile pour qu'on puisse la saisir ; b) un côté intérieur (22) ; des points dudit côté intérieur (22) gisant sur un plan parallèle à ladite surface (5), de façon à permettre l'horizontalité de ladite surface (5) lorsque ledit arrêt (19) gît sur une surface dans un plan horizontal au contact dudit côté intérieur (22), et à même de permettre d'identifier plusieurs arrêts identiques (19), les uns à côté des autres pour la prise simultanée de leur surface extérieure (5).

3. La poignée selon la revendication 1, où l'angle formé par ladite surface extérieure (5) dudit arrêt (19) et la surface de ladite portion latérale (9) dudit arrêt (19) est oblique.

4. Poignée selon l'une quelconque des revendications précédentes, où ledit côté intérieur (22) dudit arrêt (19) a au moins une jonction en rainure (20) à fixer à une jonction en languette (24) saillante de ladite zone centrale (16).

5. La poignée selon la revendication 4, où ladite au moins une jonction en rainure (22) est située dans une saillie (21).

6. Poignée selon l'une quelconque des revendications précédentes, où la section transversale de la zone inférieure (7) de ladite portion centrale (1) est plus large que la section transversale de la zone supérieure (14).

7. Poignée selon l'une quelconque des revendications précédentes, où la portion inférieure de ladite poignée est dotée de trois saillies pour les doigts (7', 7'''', 7''') ne formant que deux formes pour les doigts centraux de petite taille, étant latéralement écartées de leur côté à une distance supérieure desdites formes pour les doigts.

8. Poignée selon l'une quelconque des revendications précédentes, comprenant également un rembourrage (28) fixé à ladite poignée.

9. La poignée selon la revendication 8, où ledit rembourrage comprend un élément souple plat (28) ayant une portion centrale située sur la portion inférieure (7) de ladite poignée (1), et ayant chaque bord latéral (47) inséré dans ledit creux (8) et maintenu dans son siège par ledit arrêt (19) forcé dans ledit creux latéral (8).

10. Poignée selon l'une quelconque des revendications précédentes, où ladite portion centrale ou poignée (1) a un dispositif de branchement à chaque extrémité (17, 18).

11. La poignée selon la revendication 10, où (1A) ledit dispositif de branchement (2) est formé par deux saillies (4, 13) saillant de la face substantiellement verticale de ladite extrémité (17) ; ladite saillie (4) s'étendant du côté de la portion supérieure (17") de l'extrémité (17), en fléchissant légèrement vers le bas pour faciliter l'insertion ; elle est mince et souple de façon à permettre un effort léger des doigts pour faciliter le passage (11) entre l'élément (4) et la surface (6) ; la saillie (13) s'étend de la portion inférieure (17') de l'extrémité 17 et comprend une languette résistante et substantiellement horizontale (10) se terminant dans un élément substantiellement vertical (15) en forme de crochet, se terminant dans une extrémité épaissie (12), ayant une surface (6) inclinée vers le bas pour faciliter l'insertion.

12. La poignée selon la revendication 10, où (1B) ledit dispositif de branchement (3) est formé par deux saillies (4, 13) saillant de la face substantiellement verticale de ladite extrémité (17) ;
a) la saillie (4) s'étend du côté de la portion supérieure (17") de l'extrémité (17), elle fléchit légèrement vers le bas pour faciliter l'insertion ; elle est mince et souple de façon à permettre un effort léger des doigts pour faciliter le passage (11) entre l'élément (4) et la surface (6) ;
b) la saillie (13) s'étend de la portion inférieure (17') de l'extrémité 17 et comprend une languette résistante et substantiellement horizontale (10) se terminant dans un élément substantiellement vertical (15), se terminant dans une extrémité épaissie (12), ayant une surface (6) inclinée vers le bas pour faciliter l'insertion ; ledit élément substantiellement vertical (15) ayant une portion mince et souple (28') ; la souplesse de ladite portion mince (28') étant augmentée par le fait que ladite portion (28') saillit de la zone inférieure de ladite languette (10), ce qui augmente sa longueur et donc sa souplesse, en maintenant un écart d'une extrémité supérieure en forme de crochet (29) de la languette (10) qui engendre, en coopération avec ladite extrémité (29), un espace additionnel (23), utile en tant qu'espace d'accrochage additionnel et en tant qu'espace qui permet le mouvement souple de ladite portion (28') ;
il est donc possible d'obtenir ledit dispositif de branchement (3) en ayant un contact initial entre ladite surface (6) et ladite saillie (4) ; c'est pourquoi, grâce à l'existence de deux corps souples l'un vis-à-vis de l'autre, constitués de ladite saillie (4) et dudit élément opposé (15), il est possible d'ouvrir et augmenter ledit passage (11) en poussant légèrement vers l'intérieur l'objet à accrocher, tel que la poignée d'un sac en plastique à provisions.

13. La poignée selon la revendication 10, où (1C) ledit dispositif de branchement (84) est constitué d'au moins un corps en forme d'anneau à accrocher moyennant des moyens d'accrochage branchés à une charge.

14. La poignée selon la revendication 1, comprenant aussi :
A) un élément souple de branchement ou un instrument d'accrochage (32) comprenant : a) un arrêt (35) b) un élément souple ayant une forme courbée fermée de façon à former une boucle utilisée comme un câble double (39) inséré à travers ledit arrêt (35) de façon à obtenir une boucle supérieure (37), pour le branchement avec un crochet, et une boucle inférieure (33) ; il est donc possible de manoeuvrer ladite boucle (33) de façon à former une boucle coulissante (34) en la laissant passer autour de la même partie initiale (33"), par-dessous ledit arrêt (35), qui fait fonction d'obstacle contre le coulissement de ladite extrémité (33') dans le sens de relâchement ; il est donc possible de maintenir ladite boucle de coulissement (34) serrée autour d'une charge, en poussant simplement ledit arrêt (35) contre l'extrémité de coulissement (33') de ladite boucle (33) ;
B) au moins un élément rallongé (94) ayant un trou (95) d'un côté (88) ; il est donc possible de saisir une paire de skis en évitant le coulissement dudit instrument grâce au fait que ledit élément (94) est comprimé et bloqué entre les skis et que le câble double (39) est inséré dans ledit trou (95) et qu'il ne peut donc coulisser le long des skis dans le sens de leur longueur.

15. La poignée selon la revendication 14, comprenant également au moins un obstacle contre la sortie dudit arrêt (35) lorsqu'il est manoeuvré.

16. La poignée selon la revendication 15, où ledit au moins un obstacle est un connecteur, inclus dans ladite boucle supérieure (37), choisi dans le groupe d'anneaux (40), crochets, crochets à déclic (86) et similaires.
